# EUROPÄISCHE PATENTANMELDUNG

(11) **EP 4 621 215 A1**
(43) Veröffentlichungstag der Anmeldung: **24.09.2025**
(21) Anmeldenummer: 24164023.4
(22) Anmeldetag: 18.03.2024
(51) Int. Cl.: F03D 1/06, F03D 80/80

(54) **PITCHROHR ZUR DURCHLEITUNG VON VERSORGUNGSLEITUNGEN EINER BLATTEINSTELLWINKELREGELUNG FÜR EINE WINDKRAFTANLAGE**

(71) Anmelder: Flender GmbH, 46395 Bocholt (DE)
(72) Erfinder: KÖNIG, Christian, 46395 Bocholt (DE); TRIVIC, Daniel, 46395 Bocholt (DE)
(74) Vertreter: Michalski Hüttermann & Partner Patentanwälte mbB

(57) **Zusammenfassung**

Es ist ein Pitchrohr (26) zur Durchleitung von Versorgungsleitungen einer Blatteinstellwinkelregelung für eine Windkraftanlage (10) vorgesehen mit einem ersten Rohrstück (48), einem zweiten Rohrstück (50) und einer zwischen dem ersten Rohrstück (48) und den zweiten Rohrstück (50) aufgenommenen und in radialer Richtung zumindest teilweise in einem gemeinsamen Radialbereich mit dem ersten Rohrstück (48) und mit dem zweiten Rohrstück (50) positionierten Dichthülse (46) zur Ausbildung einer Dichtfläche (44) für eine berührende Wellendichtung. Durch die Reduzierung der Dichtfunktionalität des mehrteiligen Pitchrohrs (26) auf die Dichthülse (48) ist auch bei beengten Bauraumverhältnissen kostengünstig eine gute Abdichtung des Pitchrohrs (26) in der Windkraftanlage (10) ermöglicht.

## Beschreibung

Die Erfindung betrifft ein Pitchrohr, mit dessen Hilfe Versorgungsleitungen einer Blatteinstellwinkelregelung für eine Windkraftanlage durchgeleitet werden können. Die Erfindung betrifft zudem ein Windgetriebe mit einem derartigen Pitchrohr, einen Antriebsstrang mit einem derartigen Pitchrohr und ein Datenagglomerat zur virtuellen Abbildung eines derartigen Pitchrohrs zum Zwecke der additiven Fertigung und/oder Simulation.

Um bei Windkraftanlagen eine Blatteinstellwinkelregelung (Pitchregelung) von Rotorblättern eines Windrotors vornehmen zu können, sind elektrische und/oder hydraulische Leitungen erforderlich, die zwischen dem Windrotor und einem generatorseitigen Anschluss verlaufen. Zur Aufnahme dieser Leitungen dient ein als Pitchrohr bezeichnetes Rohr, das sich von einem Generator bis zu dem Windrotor erstrecken kann. Insbesondere sind der Windrotor und der Generator koaxial zueinander angeordnet, so dass das Pitchrohr durch ein zwischen dem Windrotor und dem Generator zwischengeschaltetes Windgetriebe über die gesamte Axialerstreckung des Windgetriebes, insbesondere koaxial zum Windgetriebe, hindurchgeführt ist.

Aus EP 3 795 861 A1 ist es bekannt ein Pitchrohr über ein außerhalb eines Getriebegehäuses eines Windgetriebes vorgesehenes Lager innerhalb eines mit dem Windgetriebe gekoppelten Generators zu lagern und gegenüber dem Getriebegehäuse des Windgetriebes schmierstoffundurchlässig abzudichten.

Es besteht ein ständiges Bedürfnis ein Pitchrohr einer Windkraftanlage auch bei beengten Bauraumverhältnissen kostengünstig abzudichten.

Es ist die Aufgabe der Erfindung Maßnahmen aufzuzeigen, die auch bei beengten Bauraumverhältnissen eine kostengünstige Abdichtung eines Pitchrohrs in einer Windkraftanlage ermöglichen.

Die Lösung der Aufgabe erfolgt durch ein Pitchrohr mit den Merkmalen des Anspruchs 1, ein Windgetriebe mit den Merkmalen des Anspruch 13, einen Antriebsstrang mit den Merkmalen des Anspruchs 14 sowie ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche bestimmt wird. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft ein Pitchrohr zur Durchleitung von Versorgungsleitungen einer Blatteinstellwinkelregelung für eine Windkraftanlage, mit einem ersten Rohrstück, einem zweiten Rohrstück und einer zwischen dem ersten Rohrstück und den zweiten Rohrstück aufgenommenen und in radialer Richtung zumindest teilweise in einem gemeinsamen Radialbereich mit dem ersten Rohrstück und mit dem zweiten Rohrstück positionierten Dichthülse zur Ausbildung einer Dichtfläche für eine berührende Wellendichtung.

Durch die separat zu dem ersten Rohrstück und zu dem zweiten Rohrstück ausgebildete Dichthülse, ist es ausreichend nur die Dichthülse für einen berührenden Dichtkontakt mit der, beispielsweise als Radialwellendichtring ausgestalteten, Wellendichtung, auszugestalten. Dies ermöglicht es gewünschte Materialeigenschaften und Oberflächeneigenschaften nur in der Dichthülse zu realisieren, während das übrige Pitchrohr, insbesondere bezüglich des ersten Rohrstücks und des zweiten Rohrstücks, für deutlich geringere Anforderungen ausgelegt sein kann. Insbesondere ist es nicht erforderlich bei radial beengten Bauraumverhältnissen, die eine radial außerhalb des Außendurchmessers der Rohrstücke aufgesteckte oder aufgeschrumpfte Hülse nicht zulassen würden, das gesamte Pitchrohr für den Dichtkontakt mit der Wellendichtung auszulegen und auszugestalten. Die Herstellungskosten des Pitchrohrs können dadurch auch bei radial beengten Bauraumverhältnissen gering gehalten sein. Zudem ermöglicht die Dichthülse kostengünstig eine Abdichtung des Pitchrohrs mit Hilfe einer berührenden Wellendichtung, wodurch im Vergleich zu einer nicht berührenden Spaltdichtung die Dichtwirkung verbessert ist. Dadurch ist es möglich einen Eintritt von Schmiermittel aus einem Windgetriebe der Windkraftanlage an dem Pitchrohr entlang in einen Innenraum eines mit dem Windgetriebe gekoppelten Generators zu vermeiden, so dass eine Beeinträchtigung, insbesondere der stromführenden Komponenten des Generators, durch ein für das Windgetriebe vorgesehenes Schmiermittel verhindert ist. Durch die Reduzierung der Dichtfunktionalität des mehrteiligen Pitchrohrs auf die Dichthülse ist auch bei beengten Bauraumverhältnissen kostengünstig eine gute Abdichtung des Pitchrohrs in der Windkraftanlage ermöglicht.

Das erste Rohrstück und das zweite Rohrstück können bezüglich ihrer geometrischen Formgestaltung im Wesentlichen auf einem Hohlzylinder basieren, wobei insbesondere an den axialen Enden des jeweiligen Rohrstücks geometrische Anpassungen für eine Verbindungstechnik mit einem anderen separat ausgeführten Bauteil vorgesehen sein können. Das Innenvolumen der Rohrstücke ist insbesondere groß genug dimensioniert, um die Versorgungsleitungen der Blatteinstellwinkelregelung für die Blätter des Windrotors aufzunehmen. Gegebenenfalls ist genug Innenvolumen bereitgestellt, um auch Signalleitungen oder Sonstiges durchführen zu können. Das erste Rohrstück und/oder das zweite Rohrstück können aus einem elektrisch leitenden Material, beispielsweise Stahl, oder elektrisch nicht-leitenden Material, beispielsweise thermoplastischer Kunststoff, hergestellt sein. Vorzugsweise besteht das Pitchrohr, abgesehen von Elementen für eine Verbindungstechnik oder Dichtungstechnik ausschließlich aus dem ersten Rohrstück, dem zweiten Rohrstück und der Dichthülse.

Die Dichthülse kann im Vergleich zu dem ersten Rohrstück und zu dem zweiten Rohrstück eine deutlich geringere axiale Erstreckung aufweisen. Die Dichthülse kann im Vergleich zu den Rohrstücken in das Material der Rohrstücke zumindest zu einem Großteil, vorzugsweise im Wesentlichen vollständig, versenkt aufgenommen sein. Die Dichthülse kann eine radial äußere Mantelfläche aufweisen, die zumindest in einem axialen Teilbereich, vorzugsweise über die gesamte axiale Erstreckung, die Dichtfläche ausbildet. Die radial äußere Mantelfläche der Dichthülse kann im Wesentlichen oberflächenbündig zu den Außenflächen des ersten Rohrstücks und des zweiten Rohrstücks verlaufen oder geringfügig hervorstehen, wobei insbesondere ein Versatz der Mantelflächen nach radial innen relativ zu den Außenflächen der Rohrstücke vermieden ist. Die zur Ausbildung der Dichtfläche vorgesehene Mantelfläche der Dichthülse ist insbesondere im Wesentlichen zylindrisch ausgebildet, wobei es grundsätzlich möglich ist, die Mantelfläche zumindest in einem axialen Teilbereich konvex und/oder ballig auszugestalten. Der insbesondere durch die Mantelfläche der Dichthülse vorgegebene radiale Bauraumbedarf des Pitchrohrs kann dadurch möglichst gering gehalten werden. Gleichzeitig ist es möglich, dass eine Belastung der Wellendichtung durch das erste Rohrstück und/oder das zweite Rohrstück während der Montage des Pitchrohrs gering gehalten ist oder sogar vermieden werden kann. Vorzugsweise definiert der Außendurchmesser der Dichthülse den maximalen Außendurchmesser des Pitchrohrs. Im Vergleich zu der übrigen Wandstärke kann die Wandstärke des ersten Rohrstücks und/oder des zweiten Rohrstücks in dem von der Dichthülse eingenommenen Axialbereich dünner ausgeführt sein. Da die Dichthülse für die Ausbildung der Dichtfläche eine vergleichsweise hohe Steifigkeit und Stabilität aufweist, führt die geringere Wandstärke der Rohrstücke tatsächlich nicht zu einer Beeinträchtigung der Stabilität und Festigkeit des Pitchrohrs, da die Dichthülse eine Funktion als lastabtragendes Element ausüben kann und eine geringere Stabilität infolge der dünneren Wandstärken kompensieren oder sogar überkompensieren kann. Dadurch ist es sogar möglich, dass die in der Wandstärke des mindestens einen Rohrstücks zumindest teilweise versenkte Dichthülse die Festigkeit und Stabilität des Pitchrohrs nicht reduziert, sondern in der Art eines versteifenden Inlays sogar verbessert. Insbesondere ist die Dichthülse einstückig ausgestaltet, wobei es grundsätzlich möglich ist, dass die Dichthülse alternativ mehrteilig ausgestaltet ist und aus zwei oder mehr voneinander unterscheidbaren, vorzugsweise ringförmigen, Einzelteilen zusammengesetzt ist.

Die Wellendichtung kann außerhalb des Pitchrohrs mit einem Bauteil verbunden werden, wobei insbesondere das Pitchrohr bei der Montage in den Antriebsstrang der Windkraftanlage in die Wellendichtung eigefädelt und in die gewünschte Endlage axial verschoben werden kann. Die Wellendichtung kann dadurch als Grobzentrierung für das Pitchrohr dienen und die Montage erleichtern. Die Wellendichtung kann insbesondere als Radialwellendichtring ausgestaltet sein.

Die Windkraftanlage, in der das Pitchrohr verbaut werden soll, kann insbesondere eine industrielle Windkraftanlage sein. Industrielle Windkraftanlagen sind vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windkraftgetriebe ist insbesondere für eine Leistung über 1,0 MW, vorzugsweise über 5,0 MW und besonders bevorzugt über 7,5 MW ausgelegt und entsprechend robust und großvolumig ausgestaltet.

Die Montage des Pitchrohrs in den Antriebsstrang der Windkraftanlage kann dadurch erfolgen, dass das Pitchrohr als Ganzes vormontiert wird in im zusammengesetzten Zustand durch die Wellendichtung bis in die definierte axiale Endlage hindurchgeschoben wird. Es ist aber auch in einem weiteren Aspekt der Erfindung möglich die Mehrteiligkeit des Pitchrohrs in einem Montageverfahren auszunutzen, indem zunächst nur eines der Rohrstücke im getrennten Zustand montiert wird, wobei die Dichthülse mit diesem Rohrstück bereits befestigt sein kann oder erst nachfolgend montiert wird. Vor der Befestigung des anderen Rohrstücks mit dem bereits montierten Rohrstück kann zunächst die Wellendichtung montiert werden, wobei die Dichthülse grundsätzlich vor der Montage der Wellendichtung oder nach der Montage der Wellendichtung montiert werden kann. Nach der Herstellung des berührenden Kontakts der Wellendichtung mit der Dichthülse kann das noch nicht montierte Rohrstück mit dem bereits montierten Rohrstück befestigt werden. Durch die Montage der Wellendichtung im getrennten Zustand der Rohrstücke kann ein die Wellendichtung belastender Kontakt eines der Rohrstücke bei der Montage des Pitchrohrs vermieden werden, wodurch auch bei beengten Bauraumverhältnissen kostengünstig eine gute Abdichtung des Pitchrohrs in der Windkraftanlage ermöglicht ist.

Insbesondere weist eine nach radial außen weisende Mantelfläche der Dichthülse im Wesentlichen den gleichen Außendurchmesser wie sich an der Dichthülse anschließende Außenflächen des ersten Rohrstücks und des zweiten Rohrstücks auf. Der radiale Bauraumbedarf des Pitchrohrs kann dadurch minimiert werden. Die Mantelfläche der Dichthülse kann insbesondere oberflächenbündig in den Formformverlauf der Außenflächen der Rohstücke übergehen. Die Dichthülse kann im Vergleich zu einem aus einem einzelnen Rohr mit konstanten Außendurchmesser hergestellten einstückigen Pitchrohr an einer Trennstelle zwischen dem erste Rohrstück und den zweiten Rohrstück einen, insbesondere ringförmigen, Teil des einstückigen Pitchrohrs ersetzen.

Vorzugsweise ist in einer insbesondere alternativen Ausführungsform vorgesehen, dass eine nach radial außen weisende Mantelfläche der Dichthülse zu an der Dichthülse anschließenden Außenflächen des ersten Rohrstücks und des zweiten Rohrstücks nach radial außen übersteht, wobei insbesondere der Außendurchmesser der Dichthülse relativ zu den Außendurchmessern der Rohrstücke derart gewählt ist, dass die mit der Dichtfläche der Dichthülse berührend zusammenwirkende Wellendichtung im nicht-berührenden entspannten Zustand eine Spielpassung mit den sich an der Dichthülse anschließenden Außenflächen ausbildet. Die Mantelfläche der Dichthülse kann einen geringfügig größeren Außendurchmesser als das erste Rohrstück und das zweite Rohrstück aufweisen. Ein Anschlagen und Abgleiten der Wellendichtung an dem ersten und/oder zweiten Rohrstück während der Montage kann dadurch verringert oder sogar ganz vermieden werden. Insbesondere kann sichergestellt werden, dass die Wellendichtung nur mit der Dichthülse in Kontakt gerät. Hierbei ist das radiale Überstehen der Dichthülse aber vorzugsweise so gering, dass eine unnötige Vergrößerung des radialen Bauraumbedarf des Pitchrohrs im eingebauten Zustand vermieden ist.

Besonders bevorzugt liegt die Dichthülse in axialer Richtung an dem ersten Rohrstück und an dem zweiten Rohrstück an. Die Dichthülse kann in axialer Richtung sowohl an dem ersten Rohrstück als auch an dem zweiten Rohrstück, insbesondere ohne axiales Spiel, axial direkt kontaktierend gefügt sein, beispielsweise indem das erste Rohrstück und das zweite Rohrstück in axialer Richtung aufeinander zu angedrückt sind. Die axiale Relativposition der Dichthülse kann dadurch definiert vorgegeben werden. Zudem kann die Dichthülse auch über ihre axialen Endseiten Kräfte abstützen, wodurch die Stabilität und Festigkeit verbessert werden können. Außerdem kann eine Relativdrehung der Dichthülse relativ zu den Rohrstücken reibschlüssig gehemmt oder vermieden werden.

Insbesondere weist das erste Rohrstück in einem radial inneren Radiusbereich einen rohrförmigen Innenansatz und das zweite Rohrstück in einem radial äußeren Radiusbereich einen rohrförmigen Außenansatz zur unmittelbaren oder mittelbaren Verbindung mit dem Innenansatz auf. Der Innenansatz und der Außenansatz können derart ausgeformt sein, dass zumindest ohne Dichthülse der Außenansatz den Innenansatz zumindest in einem axialen Teilbereich radial umgreifen kann. Insbesondere sind der Innenansatz und/oder der Außenansatz sind in Umfangsrichtung vollständig geschlossen ausgeformt. Der Innenansatz und der Außenansatz können vorzugsweise in einer Weise zusammenwirken, dass ein Verkippen oder Verkanten an der Trennstelle zwischen dem ersten und zweiten Rohrstück vermieden werden kann. Vorzugsweise kann ein relatives Verdrehen der Rohrstücke zugelassen sein.

Vorzugsweise weist der Innenansatz ein Außengewinde und/oder der Außenansatz ein Innengewinde auf, wobei insbesondere das erste Rohrstück und das zweite Rohrstück über das Zusammenwirken des Außengewindes mit dem Innengewinde, vorzugsweise selbsthemmend und/oder drehfest, mit einander verschraubt sind. Das Pitchrohr kann dadurch durch eine Relativdrehung der Rohrstücke, insbesondere während der Montage in den Antriebsstrang der Windkraftanlage, leicht zusammengesetzt werden. Durch einen hinreichend hohen Reibschluss, insbesondere infolge einer selbsthemmenden Gewindeverbindung zwischen dem Außengewinde und dem Innengewinde, ist das Pitchrohr gegen ein unbeabsichtigtes Lösen und Trennen gesichert. Zudem kann die Dichthülse bei einem Verschrauben der Rohrstücke miteinander leicht zwischen den Rohrstücken in axialer Richtung verpresst und verklemmt werden.

Besonders bevorzugt ist die Dichthülse mit dem Außengewinde des Innenansatzes verschraubt. Durch die Schraubverbindung der Dichthülse ist es nicht erforderlich die Dichthülse mit dem Innenansatz zu verpressen. Auch ohne ein Verpressen der Dichthülse mit dem Innenansatz kann die Dichthülse ausreichend gut befestigt sein, damit die Dichthülse bei der Montage und dem Zusammensetzen des Pitchrohrs nicht unbeabsichtigt abfällt. Vorzugsweise ist die Gewindeverbindung zwischen der Dichthülse und dem Innenansatz selbsthemmend ausgeführt.

Insbesondere ist die Dichthülse vollständig in einem gemeinsamen Axialbereich mit dem Innenansatz vorgesehen. Dies ermöglicht es, dass der Innenansatz in axialer Richtung über den von der Dichthülse eingenommenen Axialbereich hinaus abstehen kann, um nicht nur mit der Dichthülse, sondern auch mit dem Außenansatz zusammenwirken zu können. Eine definierte Axiallage sowie eine bewegungsfeste Befestigung kann allein durch die Verbindung des Innenansatzes mit dem Außenansatz erreicht werden, beispielsweise indem die Dichthülse zwischen Axialflächen der Rohrstücke im miteinander befestigten Zustand der Rohrstücke verpresst ist.

Vorzugsweise ist in einer weiteren Ausführungsform die Dichthülse mit dem Innengewinde des Außenansatzes verschraubt, wobei insbesondere die Dichthülse einen den Innensatz von dem Außenansatz trennenden Mittelring aufweist. Die Dichthülse kann in axialer Richtung einen gestuften Verlauf aufweisen, so dass die Dichthülse mit einem radial äußeren Teilbereich mit dem Innenansatz und mit einem radial inneren Teilbereich mit dem Außenansatz verbunden sein kann, wobei der äußere Teilbereich und der innere Teilbereich über den Mittelring axial zueinander beabstandet sein können. Der äußere Teilbereich und der innere Teilbereich können zusammen mit dem Mittelring einstückig ausgestaltet sein. Es ist aber auch möglich, dass der äußere Teilbereich, der innere Teilbereich und der Mittelring zwei oder drei miteinander verbundene separate Bauteile ausbilden, von denen vorzugsweise mindestens eines der separaten Bauteile aus einem elektrisch isolierenden Material hergestellt ist, um beispielsweise Kriechströme von dem Generator in das Windgetriebe zu vermeiden und das Windgetriebe gegenüber dem Generator elektrisch zu isolieren. Der Mittelring kann zumindest in einem Teilvolumen ein elektrisch isolierendes Dielektrikum ausbilden, welches das erste Rohrstück von dem zweiten Rohrstück elektrisch trennt.

Besonders bevorzugt weist die Mantelfläche der Dichthülse im Vergleich zu den sich an der Dichthülse anschließenden Außenflächen des ersten Rohrstücks und der zweiten Rohrstücks eine höhere Härte und/oder eine geringere Rauigkeit auf. Die Dichthülse kann an ihrer Mantelfläche für die Ausbildung der berührenden Dichtung ausgestaltet und optimiert sein, während derartige Maßnahmen bei den Rohrstücken nicht erforderlich sind und eingespart werden können.

Insbesondere weist die Dichthülse einen radial inneren Befestigungskörper und einen mit dem Befestigungskörper befestigten radial äußeren ringförmigen Lagersitz auf. Die für die berührende Wellendichtung vorgesehene Dichtfläche kann von dem Lagersitz ausgebildet sein, der beispielsweise originär für die Ausbildung eines Gleitlagers ausgestaltet ist. Die Dichtfläche kann durch ein Gleitlagermaterial, beispielsweise eine Gleitlagerbronze, des Lagersitz ausgebildet sein. Vorzugsweise ist der Lagersitz auf der übrigen Dichthülse aufgepresst. Die axiale Erstreckung des Lagersitzes kann im Wesentlichen der axialen Erstreckung der übrigen Dichthülse entsprechen, so dass Axialflächen des Lagersitzes und der übrigen Dichthülse in gemeinsamen Radialebenen liegen können. Es ist aber auch möglich, dass der Lagersitz in mindestens einer axialen Richtung über die übrige Dichthülse übersteht oder zurückspring, beispielsweise aufgrund einer längeren oder kürzeren axialen Erstreckung des Lagersitzes verglichen mit der übrigen Dichthülse.

Vorzugsweise ist zwischen der Dichthülse und dem ersten Rohrstück und/oder zwischen der Dichthülse und dem zweiten Rohrstück ein radial und/oder axial dichtendes Dichtelement dichtend aufgenommen. Ein Eindringen von Schmiermittel aus dem Windgetriebe in das Innere des Pitchrohrs kann dadurch mit einfachen und kostengünstigen Maßnahmen vermieden werden. Das Dichtelement kann beispielsweise als radial wirkender O-Ring ausgestaltete sein. Es ist aber auch möglich, beispielsweise an den Axialseiten der Dichthülse, das Dichtelement als ringförmige Flachdichtung auszugestalten, wodurch es möglich ist eine das Dichtelement teilweise aufnehme Dichtnut einzusparen und/oder einfacher auszugestalten.

Ein weiterer Aspekt der Erfindung betrifft ein Windgetriebe zur Übertragung und/oder Wandlung eines windkraftgenerierten Drehmoments, mit einem Pitchrohr, das wie vorstehend beschrieben aus- und weitergebildet sein kann, zur Durchleitung von Versorgungsleitungen einer Blatteinstellwinkelregelung für eine Windkraftanlage von einem axialen Ende zu einem anderen axialen Ende des Windgetriebes, wobei die mit der Dichtfläche der Dichthülse berührend zusammenwirkende Wellendichtung, insbesondere Radialwellendichtring, mit einem Getriebegehäuse oder einer drehmomentübertragenden Getriebewelle, insbesondere Sonnenradwelle, befestigt ist. Das Windgetriebe kann insbesondere wie anhand der vorstehendend beschriebenen Erfindungsaspekte erläutert aus- und weitergebildet sein. Durch die Reduzierung der Dichtfunktionalität des mehrteiligen Pitchrohrs auf die Dichthülse ist auch bei beengten Bauraumverhältnissen kostengünstig eine gute Abdichtung des Pitchrohrs in der Windkraftanlage ermöglicht.

Ein weiterer Aspekt der Erfindung betrifft einen Antriebsstrang für eine Windkraftanlage mit einer mit einem windkraftangetriebenen Windrotor verbindbaren Windrotorwelle, einer Motorwelle einer im Generatormodus betreibbaren elektrischen Maschine und einem die Windrotorwelle mit der Motorwelle drehmomentübertragend verbindenden Windgetriebe, das wie vorstehend beschrieben aus- und weitergebildet sein kann. Das Pitchrohr kann eine zu der Dichthülse beabstandete weitere Dichtstelle aufweisen, die vorzugsweise innerhalb der elektrischen Maschine vorgesehen ist. Insbesondere ist das Pitchrohr in der elektrischen Maschine gelagert und abgestützt, wobei vorzugsweise die weitere Dichtstelle in der Nähe dieser Lagerung ausgebildet ist. Der Antriebsstrang kann insbesondere wie anhand der vorstehendend beschriebenen Erfindungsaspekte erläutert aus- und weitergebildet sein. Das Pitchrohr kann das Windgetriebe in axialer Richtung durchdringenden. Durch die Reduzierung der Dichtfunktionalität des mehrteiligen Pitchrohrs auf die Dichthülse ist auch bei beengten Bauraumverhältnissen kostengünstig eine gute Abdichtung des Pitchrohrs in der Windkraftanlage ermöglicht.

Ein weiterer Aspekt der Erfindung betrifft eine Windkraftanlage zur Erzeugung elektrischer Energie aus Windenergie, mit einem Windrotor zur Bereitstellung eines Drehmoments aus Windenergie, einem mit dem Windrotor gekoppelten Windgetriebe zur Wandlung des Drehmoments und einem Generator zur Erzeugung elektrischer Energie aus dem von dem Windgetriebe eingeleiteten Drehmoment, wobei insbesondere der Windrotor, das Windgetriebe und der Generator koaxial zueinander angeordnet sind, und ein Pitchrohr, das wie vorstehend beschrieben aus und weitergebildet sein kann, von dem Generator durch das Windgetriebe bis zu dem Windrotor führt. Die Windkraftanlage kann, insbesondere wie anhand der vorstehendend beschriebenen Erfindungsaspekte erläutert, aus- und weitergebildet sein. Durch die Reduzierung der Dichtfunktionalität des mehrteiligen Pitchrohrs auf die Dichthülse ist auch bei beengten Bauraumverhältnissen kostengünstig eine gute Abdichtung des Pitchrohrs in der Windkraftanlage ermöglicht.

Ein weiterer Aspekt der Erfindung betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Pitchrohr, das wie vorstehend beschrieben aus- und weitergebildet sein, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Pitchrohrs, insbesondere durch 3D-Druck, und/oder bei einer Verarbeitung durch eine Datenverarbeitungseinrichtung zur Durchführung einer technischen Simulation eine Simulation der Funktionsweise des Pitchrohrs durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, wobei der Schutzbereich durch die Ansprüche bestimmt wird. Wenn ein Merkmal in den nur exemplarischen Zeichnungen und der zugehörigen Beschreibung in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.. Es zeigen:
Fig. 1: eine schematische perspektivische Ansicht einer Windkraftanlage,
Fig. 2: eine schematische Schnittansicht eines Antriebsstrangs der Windkraftanlage aus Fig. 1,
Fig. 3: eine schematische geschnittene Detailansicht einer ersten Ausführungsform eines Pitchrohrs für den Antriebsstrang aus Fig. 2 und
Fig. 4: eine schematische geschnittene Detailansicht einer zweiten Ausführungsform eines Pitchrohrs für den Antriebsstrang aus Fig. 2.

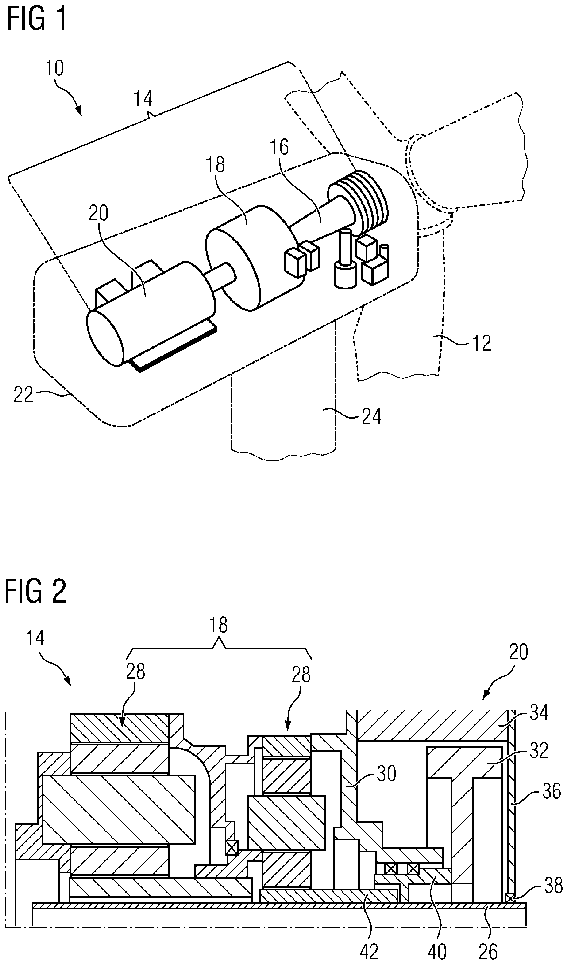

Die in Fig. 1 dargestellte industrielle Windkraftanlage 10 kann zur Erzeugung von elektrischer Energie aus Windkraft verwendet werden. Hierzu weist die Windkraftanlage 10 einen Windrotor 12 auf, der durch Wind windkraftbetrieben in Drehung versetzt werden kann. Der Windrotor 12 ist an einen Antriebsstrang 14 angekoppelt. Hierzu ist der Windrotor 12 mit einer Windrotorwelle 16 verbunden, die innerhalb des Antriebsstrangs 14 mit einem, insbesondere mindestens eine Planetenstufe aufweisenden, Windgetriebe 18 gekoppelt ist, um das über den Windrotor 12 und die Windrotorwelle 16 eingeleitete Drehmoment zu wandeln. Das in dem Windgetriebe 18 gewandelte Drehmoment wird einer im Generatormodus betriebenen elektrischen Maschine 20 zugeführt. Die von der elektrischen Maschine 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

Wie in Fig. 2 dargestellt ist, kann sich ein Pitchrohr 26 zentral durch das, beispielsweise zwei Planetenstufen 28 aufweisende, Windgetriebe 18 und den koaxial angeordneten Generator 20 hindurchgeführt sein, um Versorgungsleitungen von außerhalb des Generators 20 bis zu einer Blatteinstellwinkelregelung des Windrotors 12 führen zu können. Das Windgetriebe 18 und der Generator 20 sind über ein von dem Pitchrohr 26 durchdrungenes Gehäuseteil 30 voneinander getrennt, wobei das Gehäuseteil 30 sowohl ein Innenvolumen des Windgetriebes 18 als auch ein Innenvolumen des Generators 20 teilweise begrenzt. Der Generator 20 weist einen Rotor 32 und einen elektromagnetisch mit dem Rotor 32 zusammenwirkenden Stator 34 auf, mit dem ein Generatorgehäuse 36 verbunden ist. Im dargestellten Ausführungsbeispiel ist das Generatorgehäuse 36 mittelbar über den Stator 34 mit dem Gehäuseteil 30 verbunden, um den Rotor 32 in dem Generator 20 einzuhausen. Das Pitchrohr ist hierbei an dem von dem Windgetriebe wegweisenden axialen Ende des Generators in dem Generatorgehäuse 36 über ein Generatorlager 38 gelagert und insbesondere radial und/oder axial abgestützt.

Der Rotor 32 des Generators 20 ist mit einer Ausgangswelle 40 des Windgetriebes 18 befestigt, wobei die Ausgangswelle 40 in dem dargestellten Ausführungsbeispiel durch das Gehäuseteil 30 hindurchgeführt ist und in das Innenvolumen des Generators 20 hineinragt. Die Ausgangswelle 40 ist insbesondere mit einer Sonnenwelle 42 der im Drehmomentfluss letzten Planetenstufe 28 bewegungsfest verbunden und/oder einstückig ausgeführt. Mit der als Hohlwelle ausgestalteten Sonnenwelle 42 kann radial innen ein, insbesondere als Radialwellendichtring ausgestaltete Wellenring verbunden sein, der eine berührende Dichtung für das Pitchrohr 26 ausbildet, damit kein Schmiermittel, insbesondere Schmieröl, an dem Pitchrohr 26 entlang in das Innenvolumen des Generators 20 gelangen kann.

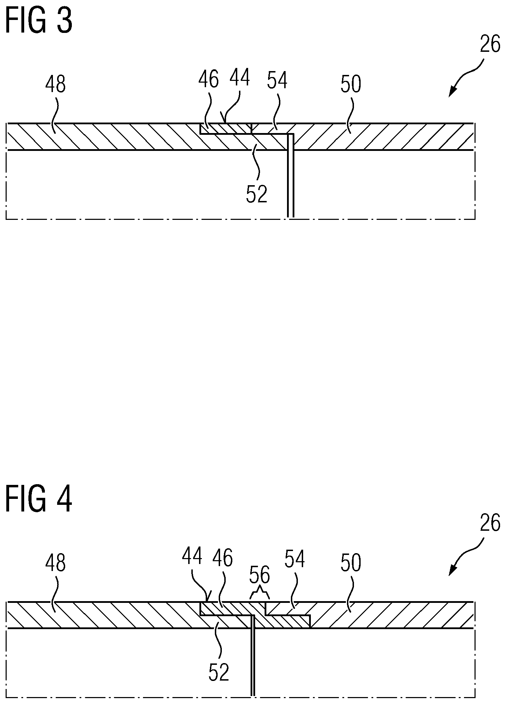

Wie in Fig. 3 dargestellt ist, kann der Wellenring berührend an einer Dichtfläche 44 anliegend, die an einer radial äußeren Mantelfläche einer Dichthülse 46 ausgebildet ist und hierzu eine geeignete Härte und Oberflächenbeschaffenheit aufweist. Die Dichtfläche 44 kann im Wesentlichen auf einem gemeinsamen Außendurchmesser mit dem ersten Rohrstück 48 und dem zweiten Rohrstück 50 ausgebildet sein oder geringfügig nach radial außen überstehen. Die Dichthülse 46 ist in axialer Richtung zwischen einem, beispielsweise windrotorseitigen, ersten Rohrstück 48 und einem, beispielsweise generatorseitigen, zweiten Rohrstück 50 verpresst. Zudem ist die ringförmige Dichthülse 46 auf einem axial auf einem inneren Radius abstehenden rohrförmigen Innenansatz 52 des ersten Rohrstücks 48 aufgesteckt, insbesondere aufgepresst, oder aufgeschraubt. Das zweite Rohrstück 50 weist einen axial auf einem äußeren Radius abstehenden rohrförmigen Außenansatz 54 auf, der im dargestellten Ausführungsbeispiel den Innenansatz 52 überdeckt. Der Außenansatz 54 kann mit dem Innenansatz 52 und beispielsweise durch Verpressen und/oder Verschrauben, drehfest und ausreichend verliergesichert verbunden sein. Zwischen dem Innenansatz 52 und dem Außenansatz 54 und/oder zwischen der Dichthülse 46 und dem ersten Rohrstück 48 und/oder zweiten Rohrstück 50 kann ein Dichtelement vorgesehen sein, damit kein Schmiermittel aus dem Windgetriebe 18 das Innere des Pitchrohrs 26 erreichen kann.

Wie in Fig. 4 dargestellt ist, kann im Vergleich zu der in Fig. 3 dargestellten Ausführungsform des Pitchrohrs 26 die Dichthülse 46 entlang ihrer axialen Erstreckung einen gestuften Verlauf aufweisen, so dass das erste Rohrstück 48 zu dem zweiten Rohrstück 50 über einen Mittelring 56 der Dichthülse 46 axial beabstandet ist. Insbesondere kann die Dichthülse 46 ganz oder teilweise aus einem elektrisch isolierenden Material hergestellt sein. Das erste Rohrstück 48 ist mit dem zweiten Rohrstück 50 mittelbar über die jeweilige Befestigungstechnik der Rohrstücke 48, 50 mit der Dichthülse 46 bewegungsfest befestigt.

## Patentansprüche

1. Pitchrohr (26) zur Durchleitung von Versorgungsleitungen einer Blatteinstellwinkelregelung für eine Windkraftanlage (10), mit
einem ersten Rohrstück (48),
einem zweiten Rohrstück (50) und
einer zwischen dem ersten Rohrstück (48) und den zweiten Rohrstück (50) aufgenommenen und in radialer Richtung zumindest teilweise in einem gemeinsamen Radialbereich mit dem ersten Rohrstück (48) und mit dem zweiten Rohrstück (50) positionierten Dichthülse (46) zur Ausbildung einer Dichtfläche (44) für eine berührende Wellendichtung.

2. Pitchrohr (26) nach Anspruch 1, wobei eine nach radial außen weisende Mantelfläche der Dichthülse (46) im Wesentlichen den gleichen Außendurchmesser wie sich an der Dichthülse (46) anschließende Außenflächen des ersten Rohrstücks (48) und des zweiten Rohrstücks (50) aufweist.

3. Pitchrohr (26) nach Anspruch 1, wobei eine nach radial außen weisende Mantelfläche der Dichthülse (46) zu an der Dichthülse (46) anschließenden Außenflächen des ersten Rohrstücks (48) und des zweiten Rohrstücks (50) nach radial außen übersteht, wobei insbesondere der Außendurchmesser der Dichthülse (46) relativ zu den Außendurchmessern der Rohrstücke (48, 50) derart gewählt ist, dass die mit der Dichtfläche (44) der Dichthülse (46) berührend zusammenwirkende Wellendichtung im nicht-berührenden entspannten Zustand eine Spielpassung mit den sich an der Dichthülse (46) anschließenden Außenflächen ausbildet.

4. Pitchrohr (26) nach einem der Ansprüche 1 bis 3, wobei die Dichthülse (48) in axialer Richtung an dem ersten Rohrstück (48) und an dem zweiten Rohrstück (50) anliegt.

5. Pitchrohr (26) nach einem der Ansprüche 1 bis 4, wobei das erste Rohrstück (48) in einem radial inneren Radiusbereich einen rohrförmigen Innenansatz (52) und das zweite Rohrstück (50) in einem radial äußeren Radiusbereich einen rohrförmigen Außenansatz (54) zur unmittelbaren oder mittelbaren Verbindung mit dem Innenansatz (52) aufweist.

6. Pitchrohr (26) nach Anspruch 5, wobei der Innenansatz (52) ein Außengewinde und der Außenansatz (54) ein Innengewinde aufweist, wobei insbesondere das erste Rohrstück (48) und das zweite Rohrstück (50) über das Zusammenwirken des Außengewindes mit dem Innengewinde, vorzugsweise selbsthemmend und/oder drehfest, mit einander verschraubt sind.

7. Pitchrohr (26) nach Anspruch 6, wobei die Dichthülse (46) mit dem Außengewinde des Innenansatzes (52) verschraubt ist.

8. Pitchrohr (26) nach Anspruch 5 oder 6, wobei die Dichthülse (46) vollständig in einem gemeinsamen Axialbereich mit dem Innenansatz (52) vorgesehen ist.

9. Pitchrohr (26) nach Anspruch 6 oder 7, wobei die Dichthülse (46) mit dem Innengewinde des Außenansatzes (54) verschraubt ist, wobei insbesondere die Dichthülse (46) einen den Innensatz (52) von dem Außenansatz (54), vorzugsweise elektrisch isolierend, trennenden Mittelring (56) aufweist.

10. Pitchrohr (26) nach einem der Ansprüche 1 bis 9, wobei die Mantelfläche der Dichthülse (46) im Vergleich zu den sich an der Dichthülse (46) anschließenden Außenflächen des ersten Rohrstücks (48) und der zweiten Rohrstücks (50) eine höhere Härte und/oder eine geringere Rauigkeit aufweist.

11. Pitchrohr (26) nach einem der Ansprüche 1 bis 10, wobei die Dichthülse (46) einen radial inneren Befestigungskörper und einen mit dem Befestigungskörper befestigten radial äußeren ringförmigen Lagersitz aufweist.

12. Pitchrohr (26) nach einem der Ansprüche 1 bis 11, wobei zwischen der Dichthülse (46) und dem ersten Rohrstück (48) und/oder zwischen der Dichthülse (46) und dem zweiten Rohrstück (50) ein radial und/oder axial dichtendes Dichtelement dichtend aufgenommen ist.

13. Windgetriebe (18) zur Übertragung und/oder Wandlung eines windkraftgenerierten Drehmoments, mit einem Pitchrohr (26) nach einem der Ansprüche 1 bis 12 zur Durchleitung von Versorgungsleitungen einer Blatteinstellwinkelregelung für eine Windkraftanlage (10) von einem axialen Ende zu einem anderen axialen Ende des Windgetriebes (18), wobei die mit der Dichtfläche (44) der Dichthülse (46) berührend zusammenwirkende Wellendichtung mit einem Getriebegehäuse oder einer drehmomentübertragenden Getriebewelle befestigt ist.

14. Antriebsstrang (14) für eine Windkraftanlage (10) mit einer mit einem windkraftangetriebenen Windrotor (12) verbindbaren Windrotorwelle (16), einer Motorwelle einer im Generatormodus betreibbaren elektrischen Maschine (20) und einem die Windrotorwelle (16) mit der Motorwelle drehmomentübertragend verbindenden Windgetriebe (18) nach Anspruch 13.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Pitchrohr (26) nach einem der Ansprüche 1 bis 12 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile des Pitchrohrs (26) insbesondere durch 3D-Druck, durchzuführen
und/oder
bei einer Verarbeitung durch eine Datenverarbeitungseinrichtung zur Durchführung einer technischen Simulation eine Simulation der Funktionsweise des Pitchrohrs (26) durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
